Europäisches Patentamt

European Patent Office

Office européen des brevets

(11) Veröffentlichungsnummer: **0 112 279**

A2

# (12) EUROPÄISCHE PATENTANMELDUNG

(21) Anmeldenummer: 83810488.3

(22) Anmeldetag: 21.10.83

(51) Int. Cl.³: **C 25 C 3/14**
G 01 F 11/28, B 65 G 53/14
C 21 B 5/00

(30) Priorität: 17.11.82 CH 6694/82

(43) Veröffentlichungstag der Anmeldung:
27.06.84 Patentblatt 84/26

(84) Benannte Vertragsstaaten:
AT CH DE FR GB IT LI NL SE

(71) Anmelder: SCHWEIZERISCHE ALUMINIUM AG

CH-3965 Chippis(CH)

(72) Erfinder: Jaggi, Ernst

N-5450 Sunde(NO)

(54) Vorrichtung zur portionenweisen Dosierung eines fluidisierbaren Schüttgutes und Verfahren zu deren Betrieb.

(57) Die Vorrichtung erlaubt das Dosieren aus einem Silo mit mindestens einer Austrittsöffnung und eignet sich insbesondere zur Zuführung von Tonerde aus einem Tagessilo zu einem Krustendurchbruch in einer Schmelzflusselektrolysezelle zur Herstellung von Aluminium.

An der Siloaustrittsöffnung ist ein steiler als 60° verlaufendes Füllrohr (16) angeflanscht, das in die obere Hälfte eines steiler als 45° geneigtes Dosierrohres (18) mündet. Dieses Dosierrohr (18) ist unten mit einer Druckleitung (26), oben mit einer Auffang- bzw. Abbremskammer (21) und einem anschliessenden Abflussrohr (22) versehen.

Mittels kurzzeitiger Oeffnung eines Steuerventils (36) in regulierbaren Zeitabständen wird Druckluft in das Dosierrohr (18) gepresst und der darin eingebettete Schüttgutpropfen in die Auffang- bzw. Abbremskammer (21) geschossen.

Fig. 1

Vorrichtung zur portionenweisen Dosierung eines fluidisierbaren Schüttgutes und Verfahren zu deren Betrieb

Die Erfindung bezieht sich auf eine Vorrichtung zum portionenweisen Zuführen eines fluidisierbaren Schüttgutes aus
einem mit wenigstens einer Austrittsöffnung versehenen Silo
zu einem Reaktionsgefäss, insbesondere von Tonerde aus einem
Tagessilo zu einem Krustendurchbruch einer Schmelzflusselektrolysezelle zur Herstellung von Aluminium, und ein Verfahren zu deren Betrieb.

Für die Gewinnung von Aluminium durch Schmelzflusselektrolyse
von Aluminiumoxid wird dieses in einer Fluoridschmelze gelöst, die zum grössten Teil aus Kryolith besteht. Das kathodisch abgeschiedene Aluminium sammelt sich unter der
Fluoridschmelze auf dem Kohleboden der Zelle, wobei die Oberfläche des flüssigen Aluminiums die Kathode bildet. In die
Schmelze tauchen von oben Anoden ein, die bei konventionellen
Verfahren aus amorphem Kohlenstoff bestehen. An den Kohleanoden entsteht durch die elektrolytische Zersetzung des
Aluminiumoxids Sauerstoff, der sich mit dem Kohlenstoff der
Anoden zu $CO_2$ und CO verbindet. Die Elektrolyse findet in
einem Temperaturbereich von etwa 940-970$^{\circ}$C statt.

Im Laufe der Elektrolyse verarmt der Elektrolyt an Aluminiumoxid. Bei einer unteren Konzentration von 1 bis 2 Gew.-% Aluminiumoxid im Elektrolyten kommt es zum Anodeneffekt, der
sich in einer Erhöhung der Spannung von beispielsweise 4 bis
5 V auf 30 V und darüber auswirkt.

- 2 -

Die Zelle wird im normalen Betrieb üblicherweise periodisch bedient, auch wenn kein Anodeneffekt auftritt. Zusätzlich muss bei jedem Anodeneffekt die Tonerdekonzentration durch Zugabe von neuem Aluminiumoxid angehoben werden. Bei gekapselten Elektrolysezellen ist eine maximale Zurückhaltung der Prozessgase gewährleistet, wenn die Bedienung automatisch erfolgt. Die Tonerde wird entweder lokal und kontinuierlich nach dem "Point-Feeder"-Prinzip oder nicht kontinuierlich über die ganze Zellenlängs- bzw. Zellenquerachse zugeführt.

Die bekannten, auf den Elektrolysezellen angeordneten Vorratsbunker bzw. Tonerdesilos sind im allgemeinen in Form von Trichtern oder Behältern mit einem trichterförmigen bzw. konisch auslaufenden Unterteil ausgebildet. Der Inhalt der auf der Zelle angeordneten Silos deckt meist einen ein- bis zweifachen Tagesbedarf, sie werden daher auch Tagessilos genannt.

Die Tonerdezufuhr vom Silo zu einem Durchbruch in der den schmelzflüssigen Elektrolyten überdeckenden Kruste erfolgt bei bekannten Vorrichtungen durch Oeffnen einer Klappe, die zwecks Chargierung geschwenkt wird, oder nach anderen Systemen mit Dosierschnecken, Dosierzylindern oder dergleichen.

Diese bekannten Dosiervorrichtungen haben den Nachteil, dass mechanisch bewegbare Teile in den anodischen Teil der Elektrolysezelle eingebaut sein müssen. Dadurch sind sie den Einwirkungen der Ofenatmosphäre mit ihrer Hitze- und Staubbelastung unterworfen, was einen mehr oder weniger umfangreichen Unterhalt erfordert.

Der Erfinder hat sich deshalb die Aufgabe gestellt, eine Vorrichtung zur portionenweisen Dosierung eines fluidisierbaren Schüttgutes zu schaffen, die keine mechanisch bewegbaren Elemente aufweist, wobei deren einfacher Aufbau eine kostengünstige Herstellung und eine weitgehende Wartungsfreiheit gewährleisten soll. Weiter soll ein Verfahren zum Betrieb dieser Vorrichtung geschaffen werden.

In bezug auf die Vorrichtung wird die Aufgabe erfindungsgemäss gelöst durch

- ein an die Siloaustrittsöffnung angeflanschtes, in bezug auf die Horizontale steiler als 60⁰ verlaufendes Füllrohr, das

- in die obere Hälfte eines in bezug auf die Horizontale mindestens 45⁰ geneigten, unten verschlossenen Dosierrohres mündet,

- eine in den untersten Bereich des Dosierrohres mündende Druckleitung mit einem mittels eines Zeitrelais betätigbaren Steuerventil,

- eine an die obere Oeffnung des Dosierrohres anschliessende Auffang- bzw. Abbremskammer für den weggeschossenen Schüttgutpfropfen, und

- ein unterhalb der Auffang- bzw. Abbremskammer angeordnetes Abflussrohr, welches das Schüttgut unter Einwirkung der Schwerkraft vollständig einer vorbestimmten Stelle im Reaktionsgefäss zuführt.

Das aus dem mindestens im untersten Bereich steilwandigen Silo über das Füllrohr in das Dosierrohr fliessende Schüttgut bildet in Ruhestellung einen Schüttkegel; dessen Spitze liegt im obersten Bereich der Einmündungsöffnung des Füllrohres. Im unteren Teil des Dosierrohres ist so ein Pfropfen aus dem fluidisierbaren Schüttgut eingebettet.

Die Siloöffnung kann mit einem Verschliessorgan versehen sein, das in normaler Ruhestellung nicht betätigt wird. Muss die Dosiervorrichtung jedoch aus irgend einem Grunde, z.B. zwecks Reparatur oder wegen Verstopfung, entfernt werden, kann der Silo vor deren Abflanschen verschlossen werden.

Die minimale Länge des Füllrohres muss so gewählt sein, dass die Dosiervorrichtung einen hinreichenden Abstand vom Silo hat. Insbesondere kann die Ausgestaltung der Auffang- bzw. Abbremskammer auf diese Minimallänge einen massgebenden Einfluss haben. Das Volumen des Dosierrohres unterhalb der Eintrittsöffnung des Füllrohres muss kleiner sein als das Volumen des Füllrohres.

Sowohl die minimale Neigung des Füllrohres als auch diejenige des Dosierrohres werden durch den Schüttwinkel des zu dosierenden fluidisierbaren Gutes bestimmt; sie muss über dem grössten Schüttwinkel liegen, damit unerwünschte Rohrverstopfungen vermieden werden können. Mit einer Neigung von mindestens 60° für das Füllrohr sind diese Anforderungen erfüllt, insbesondere auch für sogen. "beladene" Tonerde, welche aus Trockenadsorptionsanlagen stammt. Für das Dosierrohr dagegen genügt ein Winkel von mindestens 45°, weil das Schüttgut hineinrieselt.

Bevorzugt liegen Füll- und Dosierrohr in einer gemeinsamen Vertikalebene. Bei Schmelzflusselektrolysezellen zur Herstellung von Aluminium liegt diese Vertikalebene, in welcher bevorzugt auch das Abflussrohr angeordnet ist, zweckmässig parallel zu den Stirnseiten der Zelle.

0112279

Bei der kurzzeitigen Einleitung von Druckluft in den unter- sten Bereich des Dosierrohres wird der Schüttgutpfropfen weggeschossen. Der Impuls des beförderten Gutes muss vor dem Eintritt in das Reaktionsgefäss abgebremst werden, weil durch die Wucht des Aufschlages von der Beschaffenheit des Schüttgutes abhängige nachteilige Wirkungen auftreten würden, z.B. übermässige Staubentwicklung, Erosion von exponierten Teilen der Vorrichtung, Spritzer des im Reaktionsgefäss angeordneten Bades usw..

Die erfindungsgemäss vorgesehene Auffang- bzw. Bremskammer hat deshalb den Schüttgutteilchen den Impuls, welcher durch das Druckgas verliehen wird, nach dem Verlassen des Dosierrohres wieder zu entziehen. Diese Kammer ist so ausgestaltet, dass das noch nicht gebremste Schüttgut über eine möglichst geringe Strecke mit der Wandung in Berührung kommt. Zweckmässig wird ein gerades Dosierrohr mit einem ebenfalls geraden Ab- flussrohr ineinanderlaufend spitzwinklig verschweisst. Bevorzugt hat dabei das Abflussrohr mindestens den Querschnitt des Dosierrohres. Das erste kann oberhalb der Einmündung des Dosierrohres einen in gleicher Richtung wie die Flugrichtung des Schüttgutpfropfens schräg nach oben laufenden Deckel haben, wobei dessen Neigung beispielsweise 30 - 60° betragen kann. Der oberste Bereich des Abflussrohres bildet so die den Impuls des Schüttgutes vernichtende Auffang- bzw. Abbremskammer. Diese Kammer muss so gross sein, dass der gesamte hineingeschossene Pfropfen darin Platz findet, bevor er unter der Einwirkung der Schwerkraft durch das Abflussrohr zum Reaktionsgefäss geführt wird.

Die Auffang- bzw. Abbremskammer kann beispielsweise auch in Form einer Kugel oder Halbkugel, sowie eines Kegels oder Kegelstumpfs ausgebildet sein.

Um beim Auftreten von unerwarteten Verschleisserscheinungen oder sonstigen Störungen im Bereich der Auffang- bzw. Abbremskammer nicht die gesamte Dosiervorrichtung ersetzen zu müssen, können zum Dosier- und Förderrohr lösbare Verbindungen vorgesehen sein, beispielsweise mittels verschraubbarer Flansche.

Der zweckmässig eben ausgebildete Boden des Dosierrohres kann bei der Einmündung der Druckleitung spitzwinklig zu der Rohrwandung, verlaufen, beispielsweise mit einem Winkel von 30 - 60°. Die eine Schubkraft auf das Füllgut ausübende Druckluft muss optimal eingesetzt werden können.

Für die kontinuierliche Speisung von Schmelzflusselektrolysezellen mittels "Point feeding" haben sich Dosiervolumen von ca. 1 - 2 l als optimal erwiesen. Für die Erreichung von reproduzierbaren, genauen Dosiermengen ist das Dosierrohr eher dünn und lang als kurz und dick ausgebildet, vorzugsweise beträgt die Länge des unteren Rohrteiles, d.h. bis zur Eintrittsöffnung des Füllrohres, mindestens das Fünffache des Rohrdurchmessers. Bei dünnen Rohren ist die Abweichung durch Schüttwinkelungenauigkeit geringer, weil der Schüttkegel kleiner ist als bei dicken Rohren. Die obere Grenze des Verhältnisses Rohrlänge zur Rohrdicke wird einerseits durch die Zellengeometrie, anderseits durch die Ausbildung von Verstopfungen und/oder Luftblasen bestimmt.

Während des Herausschiessens des Füllgutes und insbesondere auch während des Abklingens des Luftdruckes kann Schüttgut in das Abflussrohr gelangen, das nicht Bestandteil des in der Ruhephase im Dosierrohr eingebetteten Pfropfens ist. Zum Erreichen möglichst genau reproduzierbarer Dosiermengen können eine oder mehrere der folgenden Massnahmen zur Weiterausgestaltung der Erfindung getroffen werden:

- Der Auslaufquerschnitt des Füllrohres wird im Vergleich zum Querschnitt des Dosierrohres verkleinert, vorzugsweise in einem Verhältnis von beispielsweise 0,1 - 0,5 : 1, d.h. der Auslaufquerschnitt des Füllrohres beträgt in diesem Fall nur noch 10 - 50% des Dosierrohrquerschnitts. Ein verkleinerter Auslaufquerschnitt des Füllrohres wirkt als Drossel.

- Mindestens der untere Teil des Füllrohrquerschnitts ist als sich wenig verengender Konus ausgestaltet; beispielsweise indem sich der Querschnitt über die halbe Länge des Füllrohres auf einen Viertel reduziert.

- Bei einem Silo mit verhältnissmässig flachem Auslaufkonus kann unmittelbar oberhalb der Austrittsöffnung ein nach unten geöffneter Entlastungswinkel eingebaut werden, z.B. in Form eines die Siloaustrittsöffnung rechtwinklich überdachenden Profilstückes. Dadurch wird ein übermässiger Kernfluss im Schüttgut verhindert.

Füll und Dosierrohr können in bezug auf den Querschnitt jede vernünftige geometrische Form annehmen, bevorzugt sind deren Querschnitte jedoch kreisförmig ausgebildet. Gerade verlaufende Längsachsen der Rohre verhindern einerseits Verstopfungen und andererseits übermässigen Verschleiss im oberen Bereich des Dosierrohres.

Für bestimmte Anwendungen, z.B. dem Dosieren von äusserst feinkörnigem Schüttgut, können bestimmte konstruktive Massnahmen am Abflussrohr darauf ausgehen, die Staubbildung zu minimalisieren, indem die Austrittsgeschwindigkeit durch Ausbildung von Knicken oder Bögen im unteren Teil und/oder speziellen Austrittsöffnungen, vermindert wird.

0112279

Schliesslich kann nach einer besonders vorteilhaften Ausführungsform der Erfindung dem Steuerventil ein Druckakkumulator vorgeschaltet sein, der zweckmässig ungefähr das gleiche Volumen wie das Dosierrohr hat. In das Verbindungsrohr zwischen Steuerventil und Akkumulator mündet eine kleinkalibrige, über eine Drossel führende Speiseleitung von Druckluft, welche den Akkumulator auf einen Fülldruck von 4 - 8 bar bringt. Beim Oeffnen des Steuerventils entlädt sich der Akkumulator explosionsartig über die Druckleitung und schiesst den Pfropfen aus Schüttgut mit reproduzierbarer Geschwindigkeit aus dem Dosierrohr. Nach dem Schliessen des Steuerventils wird der Akkumulator sofort wieder gefüllt und ist nach 5 - 10 sec. betriebsbereit.

In bezug auf das Verfahren zum Betrieb der Vorrichtung wird die Aufgabe erfindungsgemäss dadurch gelöst, dass mittels kurzzeitiger Oeffnung des Steuerventils in regulierbaren Zeitabständen Druckluft in das Dosierrohr gepresst und der darin eingebettete Pfropfen aus Schüttgut in die Auffang- bzw. Abbremskammer geschossen wird.

Sehr gute, reproduzierbare Resultate - mit bei 1% oder darunter liegenden Abweichungen von geförderten Tonerdemengen - sind erreicht worden, wenn die Druckluft während 0,3 - 2 sec. mit einem Druck von 4 - 8 bar in das Dosierrohr gepresst wird. Der Füllstand im Silo beeinflusst die Genauigkeit der Dosierungen nicht.

Bei Elektrolysehallen zur Herstellung von Aluminium mit moderner Infrastruktur werden sowohl Dauer und Frequenz der Druckluftstösse als auch die Aufladung eines ggf. angeschlossenen Akkumulators mittels EDV gesteuert und mit ebenfalls gesteuerten Krusteneinschlagvorrichtungen koordiniert.

Die Erfindung wird anhand von in der Zeichnung dargestellten Ausführungsbeispielen näher erläutert. Es zeigen schematisch:

Fig. 1 eine Ansicht des unteren Endes eines Tonerdesilos für eine Schmelzflusselektrolysezelle zur Herstellung von Aluminium, mit angeflanschter Dosiervorrichtung aus Stahl.

Fig. 2 eine Variante von Fig. 1 im vertikalen Teilschnitt.

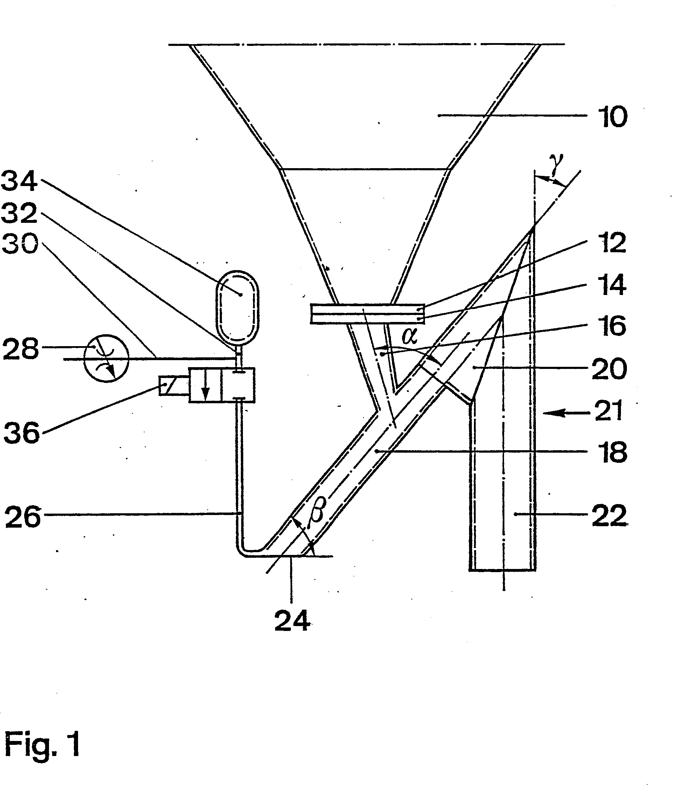

Der in Fig. 1 dargestellte untere, abgesetzte konisch ausgebildete Teil 10 eines Tonerdesilos mit verhältnismässig steilen Wänden ist mit einem Flansch 12 und einer runden Austrittsöffnung, welche dem Innendurchmesser des über einen Flansch 14 befestigten Füllrohres 16 entspricht, ausgerüstet. Die konische Verengung des Tonerdesilos weist im untersten Bereich eine nochmalige Verengung auf, wodurch Kernfluss bewirkt wird.

Die Längsachse des sich nach unten konisch verengenden Füllrohres bildet mit der Längsachse des Dosierrohres 18 einen Winkel $\alpha$ von ungefähr 50°. Die im Querschnitt verkleinerte Einmündungsöffnung des Füllrohres 16 in das Dosierrohr 18 wirkt als Drossel.

Das Dosierrohr 18 mit einem Innendurchmesser von etwa 60 mm geht kurz oberhalb der Einmündung des Füllrohres 16 in ein wesentlich weiteres Rohrstück 20 über, das in bezug auf den Durchmesser dem Abflussrohr 22 entspricht. Die beiden Rohre 20 und 22 sind in spitzem Winkel $\gamma$ von etwa 40°, entlang einer elliptischen Schweissnaht, miteinander verbunden und bilden in diesem Bereich die Auffang- bzw. Abbremskammer 21.

Der ebene Boden 24 des Dosierrohres 18 bildet mit dem Rohrmantel bei der Eintrittsöffnung der Druckleitung 26 einen
spitzen Winkel β von etwa 50°.

Die Druckluft wird über eine mit einer Drossel 28 versehene
Druckluftanschlussleitung 30 mit geringem Innendurchmesser,
beispielsweise 3 - 4 mm, zu einem Verbindungsrohr 32 zwischen
Druckluftakkumulator 34 und Steuerventil 36 geführt. Bei geschlossenem Steuerventil 36 wird der Druckluftakkumulator 34
geladen. Bei geöffnetem Steuerventil 36 entlädt sich vorerst
explosionsartig der Akkumulator über das Verbindungsrohr 32
und die Druckleitung 26, welche einen Innendurchmesser von
10 - 20 mm haben. Der Schüttguttropfen wird aus dem Dosierrohr 18 hinausgeschossen. Falls das Steuerventil 36 nach dem
Hinausschiessen des Pfropfens noch während Sekundenbruchteilen offen ist, fliesst wenig Druckluft von der Druckluftanschlussleitung 30 über die Druckleitung in das Dosierrohr 18
und dann in das Abflussrohr 22. Diese Luftmenge genügt nicht
zur Mitnahme von nennenswerten Mengen von aus dem Füllrohr 16
fliessender Tonerde. Es ist also nicht wesentlich für die
Dosiergenauigkeit, dass das Steuerventil 36 exakt mit dem
Austritt des Füllgutpfropfens aus dem Dosierrohr 18 schliesst.

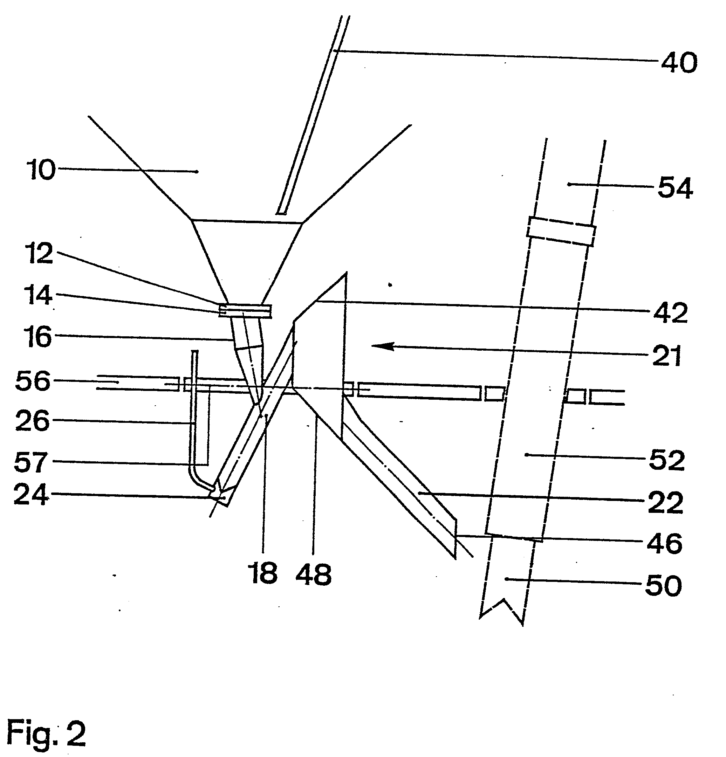

Die in Fig. 2 dargestellt Ausführungsvariante hat im Vergleich die zu Fig. 1 folgende geänderte Merkmale:

   - Das Dosierrohr 18 ist steiler angeordnet.
   - Das obere offene Ende des Dosierrohres 18 mündet ohne
     Querschnittsvergrösserung in die Abbremskammer 21. Diese
     hat im Vergleich zum Dosierrohr 18 einen wesentlich
     grösseren, vorzugsweise mindestens den doppelten Querschnitt und ist oben mit einem schrägen flachen Deckel
     42 verschlossen.

- Die Austrittsöffnung 46 der Abbremskammer 21 ist unten durch die Anordnung eines Verschlussbleches 48 und eines Abflussrohres 22 auf einen Bruchteil des Rohrquerschnittes verkleinert.

Eine Fig. 1 entsprechende Druckluftversorgung mit Steuerventil ist, abgesehen von der Druckleitung 26, nicht gezeichnet. Angedeutet ist dagegen eine aus Meissel 50, Meisselführung 52 und Druckzylinder 54 bestehende, punktförmig arbeitende Krusteneinschlagvorrichtung. Die Austrittsöffnung 46 des Abflussrohres 22 ist auf den Durchschlag des Meissels 50 in der Kruste aus erstarrtem Elektrolytmaterial gerichtet.

Die einsatzbereite Dosiereinheit ist mit einer horizontalen Abschirmung 57 versehen, welche nach dem Montieren entsprechende Oeffnungen in der Zellenkapselung 56 schliesst. Geeignete Dichtungsmedien können zur vollen Aufrechterhaltung der Wirkung der Zellenkapselung 56 beitragen. Die unter der Kapselung auf jeden Fall aus Stahl bestehende Druckleitung 26 kann über der Kapselung aus flexiblem synthetischem Material bestehen, weil dort die Wärmeeinwirkung wesentlich geringer ist.

Eine über der Austrittsöffnung des Silos angeordnete, heb- bzw. senkbare Scheidewand 40 trennt den Silo in einen grossen und einen kleinen Behälter.

Mit der Vorrichtung nach Fig. 1 ist die Reproduzierbarkeit der Dosiermengen von handelsüblicher Frischtonerde oder in Trockenadsorptionsanlagen beladener Tonerde bei verschiedenen Oeffnungszeiten des mittels eines Zeitrelais betätigten Steuerventils (36 in Fig. 1) geprüft worden. Bei einem Durchmesser der Siloaustrittsöffnung und demselben Innendurchmesser des Füllrohres 16 von 35 mm oberhalb der konischen Verengung sind folgende Dosiermengen erhalten worden:

Tabelle I: Dosiermenge in Funktion der Oeffnungszeit

(mit einem Dosiergerät nach Fig. 1)

| 0,3 sec | 1,1 sec | 1,9 sec | 4,1 sec |
|---------|---------|---------|---------|
| 1540 g | 1550 g | 1560 g | 1760 g |
| 1555 g | 1580 g | 1550 g | 1850 g |
| 1560 g | 1560 g | 1555 g | Deutlicher |
| 1545 g | 1560 g | 1545 g | Nachlauf |
| 1545 g | 1558 g | 1520 g | |

Bei Oeffnungszeiten des Steuerventils von 0,3 - 1,9 sec liegt die mittlere Abweichung unter 1%.

Bei Vergleichsversuchen mit Oeffnungszeiten von 4,1 sec dagegen gegen sind die Dosiermengen erheblich gestiegen und liegen bei etwa 1800 g. Diese Versuche zeigen einen deutlichen Nachlauf, d.h. die während der langen Oeffnungszeit nachfliessende Materialmenge ist nicht vernachlässigbar.

Patentansprüche

1. Vorrichtung zum portionenweisen Zuführen eines fluidisierbaren Schüttgutes aus einem mit wenigstens einer Austrittsöffnung versehenen Silo zu einem Reaktionsgefäss, insbesondere von Tonerde aus einem Tagessilo zu einem Krustendurchbruch einer Schmelzflusselektrolysezelle zur Herstellung von Aluminium,

gekennzeichnet durch

- ein an die Siloaustrittsöffnung angeflanschtes, in bezug auf die Horizontale steiler als 60° verlaufendes Füllrohr (16), das

- in die obere Hälfte eines in bezug auf die Horizontale mindestens 45° geneigten, unten verschlossenen Dosierrohres (18) mündet,

- eine in den untersten Bereich des Dosierrohres (18) mündende Druckleitung (26) mit einem mittels eines Zeitrelais betätigbaren Steuerventil (36),

- eine an die obere Oeffnung des Dosierrohres (18) anschliessende Auffang- bzw. Abbremskammer (21) für den weggeschossenen Schüttgutpfropfen, und

- ein unterhalb der Auffang- bzw. Abbremskammer (21) angeordnetes Abflussrohr (22), welches das Schüttgut unter Einwirkung der Schwerkraft vollständig einer vorbestimmten Stelle im Reaktionsgefäss zuführt.

2. Vorrichtung nach Anspruch 1, dadurch gekennzeichnet, dass die Längsachsen von Dosier- (18) und Füllrohr (16) in einer gemeinsamen Vertikalebene liegen.

3. Vorrichtung nach Anspruch 1 oder 2, dadurch gekennzeichnet, dass sich das Füllrohr (16) mindestens in seinem unteren Bereich konisch verengt.

4. Vorrichtung nach mindestens einem der Ansprüche 1 - 3, dadurch gekennzeichnet, dass der Querschnitt des Dosierrohres (18) im obersten Bereich auf den Querschnitt des Abflussrohres (22) erweitert ist, und dass die beiden in spitzem Winkel ( $\mu$ ) von vorzugsweise 30 - 60° miteinander verschweissten Rohre die Auffang- bzw. Abbremskammer (21) bilden.

5. Vorrichtung nach mindestens einem der Ansprüche 1 - 3, dadurch gekennzeichnet, dass ein oberhalb der Einmündung des Dosierrohres (18) in die mindestens den doppelten Querschnitt aufweisende Auffang- bzw. Abbremskammer (21) angeordneter Deckel (42) in bezug auf die Schussrichtung schräg nach oben, vorzugsweise mit einem Winkel ( $\mu$ ) von 30 - 60°, verläuft.

6. Vorrichtung nach mindestens einem der Ansprüche 1 - 5, dadurch gekennzeichnet, dass der Auslaufquerschnitt des Füllrohres (16) kleiner ist als derjenige des Dosierrohres (18), wobei das Verhältnis vorzugsweise 0,1 - 0,5 : 1 beträgt.

7. Vorrichtung nach mindestens einem der Ansprüche 1 - 6, dadurch gekennzeichnet, dass im Silo, unmittelbar oberhalb von dessen Austrittsöffnung, ein nach unten geöffnetes Profilstück      als Entlastungswinkel angeordnet ist.

8. Vorrichtung nach mindestens einem der Ansprüche 1 - 7, dadurch gekennzeichnet, dass der Druckleitung (26) und dem Steuerventil (36) ein Druckluftakkumulator (34), mit vorzugsweise gleichem Volumen wie das Dosierrohr (18), vorgeschaltet ist, der über eine mit einer Drossel (28) versehene, kleinkalibrige Druckluftanschlussleitung (30) aufladbar und durch pneumatische Betätigung des Steuerventils (36) entladbar ist.

9. Verfahren zum Betrieb der Vorrichtung nach mindestens einem der Ansprüche 1 - 8,

dadurch gekennzeichnet, dass

mittels kurzzeitiger Oeffnung des Steuerventils (36) in regulierbaren Zeitabständen Druckluft in das Dosierrohr (18) gepresst und der darin eingebettete Pfropfen aus Schüttgut in die Auffang- bzw. Abbremskammer (21) geschossen wird.

10. Verfahren nach Anspruch 9, dadurch gekennzeichnet, dass die Druckluft während 0,3 - 2 sec, mit einem Druck von 4 - 8 bar, in das Dosierrohr (18) gepresst wird.

Fig. 1

0112279

Fig. 2